# EUROPÄISCHE PATENTSCHRIFT

(11) **EP 1 571 055 B1**
(45) Veröffentlichungstag und Bekanntmachung des Hinweises auf die Patenterteilung: **03.06.2009**
(21) Anmeldenummer: 05101100.5
(22) Anmeldetag: 15.02.2005
(51) Int. Cl.: B60S 1/08

(54) **Regensensor, insbesondere für ein Kraftfahrzeug**
Rain sensor, in particular for a motor vehicle
Capteur de pluie, en particulier pour un véhicule automobile

(30) Priorität: 04.03.2004 DE 102004010492
(43) Veröffentlichungstag der Anmeldung: 07.09.2005
(73) Patentinhaber: ROBERT BOSCH GMBH, 70442 Stuttgart (DE)
(72) Erfinder: Schneider, Andreas, 20012 Shanghai (CN)

(56) Entgegenhaltungen:
- WO-A-95/01270
- DE-A1- 19 755 441
- US-A- 5 157 312
- US-A1- 2001 050 766

## Beschreibung

### Stand der Technik

Die Erfindung betrifft einen Regensensor, insbesondere für ein Kraftfahrzeug, nach Gattung des unabhängigen Anspruchs.

Es sind schon zahlreiche Regensensoren für Kraftfahrzeuge bekannt, beispielsweise aus der DE-A-196 01 805, die eine Steuereinrichtung und ein Signalmittel aufweisen. Das Signalmittel vermag hierbei ein Signal abzuheben, welches ein Maß für eine in einem Bereich auf der Scheibe des Kraftfahrzeugs vorhandene Feuchtigkeit ist Beim Einschalten des Regensensors wird hierbei automatisch ein erster Wischzyklus der Scheibenwischvorrichtung ausgelöst, der die Scheibe reinigt Das Signal des Signalmittels nach diesem ersten Wischzyklus wird als Referenzwert für eine saubere und trockene Scheibe in der Steuereinrichtung gespeichert Unter- bzw. überschreitet das Signal danach eine vom Referenzwert abgeleitete Schwelle, so wird von der Steuereinrichtung ein Wischzyklus ausgelöst oder die Scheibenwischvorrichtung in einen bestimmten Betriebsmodus geschaltet

Weiterhin ist aus der EP-B-0 705 186 bekannt, mehrere Messkanäle vorzusehen, die unterschiedlichen Bereichen auf der Scheibe entsprechen und in Abhängigkeit der Signale aus den verschiedenen Messkanälen die Wischzyklen der Scheibenwischvorrichtung zu steuern.

Aus der US-5,157,312 ist ein kapazitiver Regensensor bekannt, bei dem ein Schwellwert beim Einschalten des Regensensors nach längerer Zeit den zuletzt vorhandenen, gespeicherten Wert annimmt.

### Vorteile der Erfindung

Der erfindungsgemäße Regensensor mit den Merkmalen des Hauptanspruchs hat den Vorteil, dass durch die Speicherung eines vom Signal S abgeleiteten ersten Wertes als Schwelle beim Abschalten des Regensensors und der Berücksichtigung dieser Schwelle beim Einschalten des Regensensors, auf ein Referenzwischen beim Einschalten des Regensensors verzichtet werden kann. Insbesondere bei trockener Scheibe ist ein derartiger Referenzwischzyklus unnötig und belastet Wischblätter und Mechanik der Scheibenwischvorrichtung. Darüber hinaus wird es vom Führer des Kraftfahrzeugs oft als störend empfunden, wenn beim Einschalten des Regensensors ein Wischzyklus durchgeführt wird, obwohl die Feuchtigkeitsverhältnisse auf der Scheibe keinen Wischzyklus erfordern. Besonders vorteilhaft ist hierbei, wenn erst bei über- bzw. unterschreiten eines von der Schwelle abgeleiteten zweiten Wertes ein Wischzyklus durch die Abgabe eines Wischsignals ausgelöst wird.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist hierbei, wenn ein Korrekturmittel vorgesehen ist, das ein Korrektursignal abzugeben vermag und die Steuereinrichtung den aus der Schwelle abgeleiteten zweiten Wert unter Berücksichtigung des Korrektursignals korrigiert. Auf diese Weise können verschiedene Umwelteinflüsse berücksichtigt werden, welche die Signale der Signalmittel beeinflussen.

Hierbei ist es besonders vorteilhaft, wenn das Korrekturmittel die Temperatur des Signalmittels erfasst, da die Temperatur einen erheblichen Einfluss auf die Signale ausübt. Dies gilt insbesondere dann, wenn das Signalmittel optoelektronische Bauelemente aufweist.

Weiterhin ist es als vorteilhaft anzusehen, wenn das Signalmittel mehrere Messkanäle aufweist, die zumindest teilweise unterschiedlichen Bereichen auf der Scheibe zugeordnet sind. Damit gibt das Signalmittel mehrere Signale ab, die jeweils ein Maß für die im jeweiligen Bereich vorhandene Feuchtigkeit sind. Auf diese Weise ergibt sich ein besonders angenehmes Wischverhalten der Scheibenwischvorrichtung.

Besonders vorteilhaft ist es hierbei, wenn die Steuereinrichtung Vergleichsmittel aufweist, die die verschiedenen Signale der Messkanäle miteinander vergleicht. Hierdurch wird das Wischverhalten noch weiter verbessert, da sich Schmutz im Gegensatz zu Regentropfen homogen auf die Scheibe verteilt, während die Regentropfen inhomogen auf die Messkanäle verteilt sind.

Ein besonders einfacher, kostengünstiger und langlebiger Regensensor wir dadurch erzielt, dass das Signalmittel einen optischen Sender aufweist, der Strahlung abzugeben vermag, sowie einen optischen Empfänger aufweist, der die Strahlung des Senders zu empfangen vermag, wobei die Strahlung auf dem Wege zwischen dem Sender und dem Empfänger als Messkanal an einer Grenzfläche der Scheibe zumindest teilweise reflektiert wird.

Wenn die Summe aus der Anzahl der Sender und Empfänger kleiner/gleich der Anzahl der Messkanäle ist, können optische Bauelemente eingespart werden, wodurch der Regensensor noch effizienter ausgestaltet werden kann.

In einer besonders einfachen Ausführung ist die Anzahl der Sender oder Empfänger gleich der Anzahl der Messkanäle.

### Zeichnungen

Verschiedene Ausführungsbeispiele der Erfindung sind in den Zeichnungen dargestellt und in der nachfolgenden Beschreibung näher erläutert.

Es zeigen:
- Figur 1: einen erfindungsgemäßen Regensensor in einer schematischen Darstellung,
- Figur 2: die Funktion eines erfindungsgemäßen Regensensors in einem Ablaufdiagramm und
- Figur 3: Signalmittel und Messkanäle eines erfindungsgemäßen Regensensors in einer Variation.

### Beschreibung der Ausführungsbeispiele

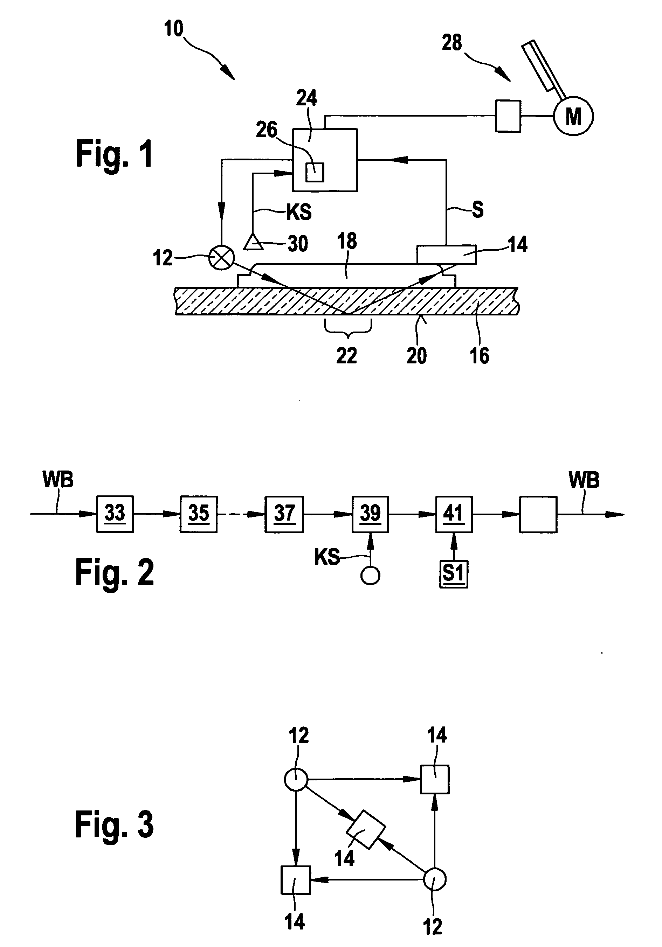

In Figur 1 ist ein erfmdungsgemäßer Regensensor 10 in einer schematischen Darstellung gezeigt. Dieser umfasst im Wesentlichen einen Sender 12 und einen Empfänger 14 als Signalmittel, die als Halbleiterbauelemente ausgebildet sind. Hierbei ist der Sender 12 als Leuchtdiode ausgestaltet, die infrarote Strahlung abzugeben vermag. Der Empfänger 14 ist als LRD ausgebildet und in dem Wellenlängenbereich des Senders 12 empfindlich.

Der Regensensor 10 weist einen Lichtleitkörper 18 auf, der auf einer Scheibe 16, insbesondere der Windschutzscheibe des Kraftfahrzeugs befestigt. Im Betrieb sendet der Sender 12 infrarote Strahlung in Richtung des Lichtleitkörpers 18, der zur Einkopplung der Strahlung in die Scheibe 16 dient. Auf der dem Lichtleitkörper 18 abgewandten Glas-Luft Grenzfläche 20 der Scheibe 16 wird die Strahlung des Senders 12 in einem Messbereich 22 totalreflektiert, sofern im Messbereich 22 kein Schmutz oder keine Feuchtigkeit vorhanden ist. Durch den Lichtleitkörper 18 wird die totalreflektierte Strahlung des Senders 12 auf den Empfänger 14 geleitet. Auf Grund von Änderungen der Strahlungsintensität durch Schmutz oder Feuchtigkeit im Messbereich 22, gibt der Empfänger 14 ein Signal S an eine Steuereinrichtung 24. Die Steuereinrichtung 24 weist ein Speichermittel 26 auf, in dem das beim Abschalten des Regensensors 10 anliegende Signal S als Schwelle S 1 gespeichert wird. Natürlich kann auch ein aus dem Signal S echt abgeleiteter erster Wert als Schwelle S1 gespeichert werden, beispielsweise ein um 10 % reduzierter Wert oder ein beliebig in anderer Weise veränderter Wert gespeichert werden. Ebenso natürlich ― wie hier im Beispiel ― der Wert des Signals S selbst.

Beim Einschalten des Regensensors 10 wird nun die Schwelle S1 aus dem Speichermittel 26 gelesen und mit dem aktuellen Signal S des Empfängers 14 als zweitem Wert verglichen. Bei Unterschreiten dieser Schwelle S1 löst die Steuereinrichtung 24 einen Wischzyklus einer Scheibenwischvorrichtung 28 aus, da davon auszugehen ist, dass die Scheibe 16 im Messbereich 22 verschmutzt oder feucht ist. In einer Variation der Erfindung kann auch ein aus dem aktuellen Signal S abgeleiteter zweiter Wert mit der Schwelle S 1 verglichen werden. Dies ist natürlich äquivalent zu dem Fall, dass der Wert des aktuellen Signals S mit einem aus der Schwelle S1 abgeleiteten Wert verglichen wird.

Da die Halbleiterbauelemente des Regensensors 10 sehr temperaturempfindlich sind, ist ein Temperatursensor 30 vorgesehen, der im Bereich der Halbleiterbauelemente, wie Sender 12 und Empfänger 14 angeordnet ist. Dieser Temperatursensor 30 übermittelt ein Korrektursignal KS an die Steuereinrichtung 24. Diese berücksichtigt das Korrektursignal KS zur Ansteuerung der Scheibenwischvorrichtung 28 indem entweder im Speichermittel 26 beim Ausschalten des Regensensors 10 nicht der aktuell anliegende Wert S sondern eine durch das Korrektursignal KS abgeleitete Größe als Schwelle S1 gespeichert wird, oder dass beim Einschalten des Regensensors 10 nicht das Signal S mit der Schwelle S1 verglichen wird, sondern ein aus dem Signal S abgeleiteter zweiter Wert mit der Schwelle S1 des Speichermittels 26 verglichen wird. Damit können Temperatureffekte in einfacher Weise berücksichtigt werden.

In Figur 2 ist ein Ablaufschema der Steuereinrichtung 24 eines erfindungsgemäßen Regensensors 10 dargestellt. Wird der Wischbetrieb in einem ersten Ausschaltschritt 33 ausgeschaltet, so wird ein aus dem aktuell anliegenden Signal S des Empfängers 14 abgeleiteter erster Wert in einem Speicherschritt 35 in das Speichermittel 26 geschrieben. Wird der Regensensor 10 wieder in einem Einschaltschritt 37 eingeschaltet, so wird in einem Korrekturschritt 39 das aktuell anliegende Signal S mit Hilfe des Korrektursignals KS korrigiert. In einem Prüfschritt 41 wird das korrigierte Signal mit der Schwelle S 1 aus dem Speichermittel 26 verglichen und gegebenenfalls ein Wischsignal WS zur Auslösung Wischzyklus der Scheibenwischvorrichtung 28 abgegeben. Ist ein Wischzyklus durchgeführt worden, so wird im Anschluss daran das Signal S gemessen und als weiterer Referenzwert verwendet.

In Figur 3 ist eine Variation eines erfindungsgemäßen Regensensors gezeigt. Dieser weist zwei Sender 12 und drei Empfänger 14 auf, so dass insgesamt sechs Mess-Strecken mit sechs Messbereichen und damit sechs Messkanäle gebildet sind. Selbstverständlich können auch nur zwei Empfänger 14 und zwei Sender 12 verwendet werden, wodurch vier Mess-Strecken und damit vier Messkanäle erzeugt werden. Die Steuereinrichtung 24 vermag bei einer derartigen Ausbildung die einzelnen Kanäle, d.h. die einzelnen Signale S der einzelnen Empfänger 14 einzeln auszuwerten. Da sich Schmutz im Wesentlichen homogen auf die Scheibe verteilt, ergibt sich eine im Wesentlichen gleiche Signalverteilung auf die einzelnen Empfänger als Signalmittel. Ein Regentropfen hingegen wird typischerweise von einem Kanal und damit nur von einem Empfänger detektiert, wodurch Schmutz und Regen unterschieden werden können.

## Patentansprüche

1. Regensensor (10), insbesondere für ein Kraftfahrzeug, mit einer Steuereinrichtung (24) und einem Signalmittel (12, 14), das ein Signal (S) abzugeben vermag, das ein Maß für eine in einem Bereich auf einer Scheibe (16) vorhandene Feuchtigkeit ist, wobei ein Speichermittel (26) vorgesehen ist, das nen vom Signal (S) abgeleiteten ersten Wert als Schwelle (S1) speichert und die Steuereinrichtung (24) beim Einschalten des Regensensors (10) das Signal (S) überprüft und bei unter- oder überschreiten eines aus der gespeicherten Schwelle (S1) abgeleiteten zweiten Wertes ein Wischsignal (WS) zur Auslösung eines Wischzyklus einer Scheibenwischvorrichtung (28) abgibt, **dadurch gekennzeichnet, daß** der erste Wert als Schwelle (S1) beim Abachatten des Regensensors (10) gespeichert wird.

2. Regensensor (10) nach Anspruch 1, **dadurch gekennzeichnet, dass** ein Korrekturmittel (30) vorgesehen ist, das ein Korrektursignal (SK) abzugeben vermag und die Steuereinrichtung (24) den aus Schwelle (S1) abgeleiteten ersten Wert unter Berücksichtigung des Korrektursignals (KS) korrigiert.

3. Regensensor (10) nach Anspruch 2, **dadurch gekennzeichnet, dass** das Korrekturmittel (30) die Temperatur des Signalmittels (12,14) erfasst.

4. Regensensor (10) nach einem der vorhergehenden Ansprüche, **dadurch gekennzeichnet, dass** das Signalmittel (12, 14) mehrere Mess-Kanäle aufweist, die zumindest teilweise unterschiedlichen Bereichen auf der Scheibe (16) zugeordnet sind und damit mehrere Signale (S) abgibt, die jeweils ein Maß für die im jeweiligen Bereich vorhandene Feuchtigkeit sind.

5. Regensensor (10) nach Anspruch 4, **dadurch gekennzeichnet, dass** die Steuereinrichtung (24) Vergleichsmittel aufweist, das die Signale (S) miteinander vergleicht.

6. Regensensor nach einem der vorhergehenden Ansprüche, **dadurch gekennzeichnet, dass** das Signalmittel (12, 14) zumindest einen optischen Sender (12) aufweist, der Strahlung abzugeben vermag und einen optischen Empfänger (14) aufweist, der die Strahlung des Senders zu empfangen vermag, und die Strahlung auf dem Wege zwischen dem Sender (12) und dem Empfänger (14) als Mess-Kanal, an einer Grenzfläche (20) der Scheibe (16) zumindest teilweise reflektiert wird.

7. Regensensor (10) nach Anspruch 6, **dadurch gekennzeichnet, dass** die Summe aus der Anzahl der Sender (12) und Empfänger (14) kleiner gleich der Anzahl der Mess-Kanäle ist.

8. Regensensor (10) nach Anspruch 6, **dadurch gekennzeichnet, dass** die Anzahl der Sender (12) oder Empfänger (14) gleich der Anzahl der Mess-Kanäle ist.

## Claims

1. Rain sensor (10), in particular for a motor vehicle, having a control device (24) and a signalling means (12, 14) which is able to emit a signal (S) which is a measure of moisture in a region of a windscreen (16), a storage means (26) which stores a first value derived from the signal (S) as a threshold (S1) being provided, and the control device (24) checking the signal (S) when the rain sensor (10) is switched on and emitting a wiping signal (WS) for triggering a wiping cycle of a windscreen wiper device (28) if a second value derived from the stored threshold (S1) is undershot or exceeded, **characterized in that** the first value is stored as a threshold (S1) when the rain sensor (10) is switched off.

2. Rain sensor (10) according to Claim 1, **characterized in that** a correction means (30) which is able to emit a correction signal (SK) is provided, and the control device (24) corrects the first value, which is derived from the threshold (S1), taking into account the correction signal (KS).

3. Rain sensor (10) according to Claim 2, **characterized in that** the correction means (30) detects the temperature of the signalling means (12, 14).

4. Rain sensor (10) according to one of the preceding claims, **characterized in that** the signalling means (12, 14) has a plurality of measuring channels, which are at least partially assigned to different regions of the windscreen (16), and thus emits a plurality of signals (S) which are each a measure of the moisture in the respective region.

5. Rain sensor (10) according to Claim 4, **characterized in that** the control device (24) has comparison means which compares the signals (S) with one another.

6. Rain sensor according to one of the preceding claims, **characterized in that** the signalling means (12, 14) has at least one optical transmitter (12), which is able to emit radiation, and an optical receiver (14) which is able to receive the radiation from the transmitter, and the radiation on the path between the transmitter (12) and the receiver (14), as a measuring channel, is at least partially reflected at an interface (20) of the windscreen (16).

7. Rain sensor (10) according to Claim 6, **characterized in that** the sum of the number of transmitters (12) and receivers (14) is less than or equal to the number of measuring channels.

8. Rain sensor (10) according to Claim 6, **characterized in that** the number of transmitters (12) or receivers (14) is equal to the number of measuring channels.

## Revendications

1. Détecteur de pluie (10), en particulier pour véhicule automobile, qui présente un dispositif de commande (24) et un moyen de signalisation (12, 14) capable de délivrer un signal (S) qui constitue une mesure de l'humidité présente sur une partie d'une vitre (16), un moyen de mémoire (26) étant prévu pour conserver en tant que valeur de seuil (S1) une première valeur dérivée du signal (S), le dispositif de commande (24) vérifiant le signal (S) lors du branchement du détecteur de pluie (10) et délivrant un signal d'essuie-glace (WS) qui déclenche un cycle de balayage du dispositif d'essuie-glace (28) si une deuxième valeur dérivée du seuil (S1) conservé en mémoire n'est pas atteinte ou est dépassée,
**caractérisé en ce que**
la première valeur qui présente la forme d'un seuil (S1) est conservée en mémoire lors du débranchement du détecteur de pluie (10).

2. Détecteur de pluie (10) selon la revendication 1, **caractérisé en ce qu'**il présente un moyen de correction (30) capable de délivrer un signal de correction (SK) et **en ce que** le dispositif de commande (24) corrige la première valeur dérivée du seuil (S1) en tenant compte du signal de correction (KS).

3. Détecteur de pluie (10) selon la revendication 2, **caractérisé en ce que** le moyen de correction (30) détecte la température du moyen de signalisation (12, 14).

4. Détecteur de pluie (10) selon l'une des revendications précédentes, **caractérisé en ce que** le moyen de signalisation (12, 14) présente plusieurs canaux de mesure qui sont associés à des parties au moins partiellement différentes de la vitre (16) et qui délivrent ainsi plusieurs signaux (S) qui constituent chacun une mesure de l'humidité présente dans chaque partie.

5. Détecteur de pluie (10) selon la revendication 4, **caractérisé en ce que** le dispositif de commande (24) présente des moyens de comparaison qui comparent les uns aux autres les signaux (S).

6. Détecteur de pluie selon l'une des revendications précédentes, **caractérisé en ce que** le moyen de signalisation (12, 14) présente au moins un émetteur optique (12) qui peut délivrer un rayonnement et présente un récepteur optique (14) qui peut recevoir le rayonnement de l'émetteur, le rayonnement étant réfléchi au moins en partie sur une surface frontière (20) de la vitre (16) sur le parcours qui s'étend entre l'émetteur (12) et le récepteur (14).

7. Détecteur de pluie (10) selon la revendication 6, **caractérisé en ce que** la somme du nombre des émetteurs (12) et des récepteurs (14) est inférieure ou égale au nombre des canaux de mesure.

8. Détecteur de pluie (10) selon la revendication 6, **caractérisé en ce que** le nombre des émetteurs (12) ou des récepteurs (14) est identique au nombre des canaux de mesure.
